# FASCICULE DE BREVET EUROPEEN

(11) **EP 0 498 743 B1**
(45) Date de publication et mention de la délivrance du brevet: **20.12.1995**
(21) Numéro de dépôt: 92420041.3
(22) Date de dépôt: 06.02.1992
(51) Int. Cl.: C01G 55/00, C22B 3/00

(54) **Procédé d'élimination du ruthenium contenu dans des solutions uranifères**
Verfahren zur Entfernung von Ruthenium aus Uran enthaltenden Lösungen
Process for the elimination of ruthenium from uranous solutions

(30) Priorité: 08.02.1991 FR 9101914
(43) Date de publication de la demande: 12.08.1992
(73) Titulaire: COMURHEX Société pour la Conversion de l'Uranium en Métal et Hexafluorure, F-78140 Velizy Villacoublay (FR)
(72) Inventeur: Floreancig, Antoine, F-38140 La Murette (FR); Nicolas, François, F-84100 Orange (FR)
(74) Mandataire: Dubois-Chabert, Guy

(56) Documents cités:
- FR-A- 2 355 919
- US-A- 2 894 816
- US-A- 4 111 856
- CHEMICAL ABSTRACTS, vol. 79, no. 18, 05 novembre 1973, Columbus, OH (US); N.F. CHIZH, p. 104, no. 106863e
- CHEMICAL ABSTRACTS, vol. 73, no. 20, 16 novembre 1970, Columbus, OH (US); M. MISHIMA, p. 456, no. 105038d

## Description

### DOMAINE TECHNIQUE

L'invention concerne un procédé d'élimination du ruthénium (Ru) contenu dans des solutions uranifères, en particulier celles provenant des usines de retraitement de combustibles nucléaires irradiés et comportant encore des traces de ruthénium.

### ETAT DE LA TECHNIQUE

Après les opérations de retraitement des combustibles nucléaires irradiés à base d'uranium, on obtient en général des solutions uranifères débarrassées du plutonium et des autres produits de fission apparus au coups du séjour en réacteur dudit combustible uranifère.
Cependant, il reste toujours quelques traces, de l'ordre de quelques ppb (partie par billion), de Ru 106 qui à ce niveau de concentration sont très difficiles à éliminer et à doser chimiquement mais qui confèrent à la solution uranifère les contenant une radioactivité préjudiciable qui se retrouve dans les différents flux et notamment dans les effluents. L'utilisation des solutions uranifères ainsi polluées pose aussi des problèmes de sécurité: protection du personnel et pollution des installations où sont recyclées et reconverties ces solutions uranifères. Il est donc du plus grand intérêt de pouvoir éliminer complètement ces traces de Ru 106 des solutions uranifères, sinon il serait nécessaire de stocker lesdites solutions pour laisser décroître naturellement la radioactivité jusqu'à un niveau acceptable.

Pour effectuer la séparation du Ru, les procédés connus consistent généralement à effectuer des extractions liquide-liquide à l'aide de différents solvants généralement peu courants et/ou contenant des additifs particuliers, ces procédés pouvant être précédés de traitements chimiques du Ru. On connaît également des procédés où le Ru est précipité sous forme de composés, ou réduit et déposé électrochimiquement sous forme métallique.

Ces méthodes sont généralement adaptées pour effectuer le retraitement proprement dit des solutions uranifères, c'est-à-dire contenant de fortes quantités de Ru, et leur résultat est aléatoire quand il s'agit d'éliminer des traces de Ru. Par ailleurs avec les méthodes par extraction liquide-liquide, le Ru est généralement extrait sous forme diluée et liquide ce qui peut poser des problèmes pour son stockage et son rejet ultérieur après désactivation.

On connaît déjà d'après le document US-A- 2 894 816 un procédé d'extraction du ruthénium d'une solution uranifère contenant également du plutonium et des produits de fission. Ce procédé consiste à ajouter à la solution à traiter, un ion nitrite du type nitrite alcalin ou alcalino-terreux puis à faire subir à ladite solution un procédé d'extraction liquide-liquide utilisant un solvant organique.

On connaît également d'après le document FR-A-2 355 919 un procédé de séparation et de purification du ruthénium provenant de solutions radioactives contenant outre le ruthénium, d'autres métaux tels que l'osmium ou l'iridium. Ce procédé comprend les étapes suivantes :
- formation d'un complexe de nitrosylruthénium,
- transformation de ce complexe en un chlorocomplexe de nitrosylruthénium, et
- séparation de ce chlorocomplexe en utilisant un échangeur d'anions ou une résine appropriée.

### DESCRIPTION DE L'INVENTION

Compte tenu de ces inconvénients, la demanderesse a mis au point un procédé d'épuration de solutions uranifères en ruthénium caractérisé en ce qu'on ajoute des nitrites à ladite solution et qu'on fixe le ruthénium par passage sur une résine ammonium quaternaire ou amine tertiaire.

Un tel procédé est particulièrement adapté aux solutions de nitrate d'uranyle diluées ou concentrées.

Ces solutions peuvent contenir de 50 à 600 g d'uranium par litre (gU/l), mais habituellement se situent entre 150 et 400 gU/l.

La teneur en Ru des solutions uranifères à traiter peut être très élevée, elle peut aller de quelques ppb à plusieurs g/l. Cependant le procédé de l'invention est surtout intéressant parce qu'il permet d'éliminer complètement le Ru desdites solutions, y compris en partant de solutions ne contenant que quelques traces de Ru, par exemple correspondant à une activité de Ru 106 de 2 à 50 » Ci par kg d'uranium ou même de 2 à 25 »Ci/kgU.

L'acidité des solutions traitées se situe entre environ 0,01N et 0,5N. La température est habituellement inférieure à 40°C ou de préférence comprise entre 0 et 30°C pour préserver la stabilité des nitrites et également préserver la résine.

L'ajout de nitrite peut être fait par addition d'un nitrite alcalin ou de préférence de nitrite d'ammonium, ou encore par barbotage de NO₂ directement dans la solution uranifère; la concentration utilisée est comprise entre 0,1 et 50 g/l exprimé en NO₂.

Sans cet ajout de nitrite aucune fixation sélective du ruthénium ne se fait sur les résines et leur action est d'autant plus efficace qu'ils sont ajoutés tardivement à la solution uranifère, le mieux étant de les introduire simultanément à l'introduction de la solution uranifère dans le lit de résine.

Comme cela a été dit les résines sont du type ammonium quaternaire ou amine tertiaire. On peut de préférence utiliser les résines suivantes de la société RHOM et HAAS :
- Amberlite IRA 420 (ou IRA 900): Anionique forte, gel type I (ammonium quaternaire)
- Amberlite IRA 93 SP: moyennement anionique et macroporeuse (amine tertiaire)

Ces résines permettent de fixer un complexe nitrosyl-ruthénium obtenu grâce à l'addition de nitrite. Il est donc important que la solution d'alimentation de la résine soit dans les meilleures conditions possibles pour que ce complexe puisse se former. Pour cela l'addition du nitrite et la fixation de Ru sont effectuées entre 10°C et 50°C et de préférence en-dessous de 25°C.

Le procédé selon l'invention permet d'obtenir des solutions uranifères complètement exemptes de Ru, les premières fuites pouvant être constatées après avoir fait passer sur la résine un volume de solution uranifère représentant 20 à 25 fois le volume du lit de résine exprimé en Bed Volume (BV), soit 20 à 25 BV. Il est particulièrement important d'utiliser l'agent fixant sous forme résine pour parvenir à un tel résultat.

Bien entendu on peut accroître la saturation de la résine en tolérant une fuite de Ru dans la solution uranifère effluente, dans des limites choisies.

Après saturation de la résine en Ru, on peut procéder à son lavage à l'aide d'un simple lavage à l'eau pour récupérer la totalité de l'uranium imprégnant la résine, sans éluer le Ru fixé.

La résine peut alors être aisément stockée en décharge controlée.

Mais on peut avantageusement poursuivre le procédé d'épuration de façon à récupérer la résine pour lui faire effectuer des cycles successifs de fixation-élution du Ru, tout en obtenant "in fine" le Ru sous forme concentrée et solide facile à stocker.

Ce complément de procédé consiste, après avoir effectué le lavage à l'eau précité, à éluer la résine saturée en Ru par un acide fort. On peut alors neutraliser la solution obtenue contenant le Ru, ce dernier restant en solution, puis fixer de nouveau le Ru par passage de la solution neutralisée sur une résine du type thiol comportant au moins un groupement RSH.

L'avantage de cette nouvelle fixation de Ru réside en ce que ces résines du type thiol fixent dans ce milieu neutralisé une quantité de Ru, par unité de volume de résine, au moins 5 à 10 fois supérieure à celle fixée par les résines amines tertiaires ou ammonium quaternaire utilisée dans la phase précédemment décrite du procédé selon l'invention. Cette quantité de Ru fixée est d'autant plus importante que la solution d'élution neutralisée alimentant la résine est plus concentrée en Ru. Les coefficients de partage (rapport entre les concentrations de Ru dans la résine et dans la solution, à l'équilibre) peuvent dépasser 700.

Ainsi après fixation, on peut disposer de la résine chargée en Ru en vue d'un stockage en décharge contrôlée sous forme solide concentrée, un éventuel traitement de conditionnement pouvant être préalablement opéré, en vue d'autres destinations ultérieures.

On obtient également, après fixation de Ru, une solution de sel effluent exempte de Ru qui peut être re-utilisée, concentrée et/ou facilement rejetable.

Un mode particulier de réalisation du complément de procédé consiste à utiliser l'acide nitrique comme acide fort d'élution, de préférence en solution concentrée, pour réextraire Ru en solution la plus concentrée possible. La solution acide obtenue est ensuite neutralisée à l'aide par exemple d'ammoniac ou d'une base forte alcaline comme la potasse ou la soude pour donner une solution de nitrate d'ammonium, de potasium ou de sodium contenant le ruthénium en solution.

Parmi les résines du type thiol, la résine du type IMAC GT 73 de la société DUOLITE s'est montrée particulièrement intéressante. On y fait percoler la solution neutralisée contenant Ru, obtenue dans la première phase du procédé et dont le pH est habituellement supérieur à 5 ou de préférence compris entre 8 et 10 et la teneur en nitrate voisine de 300 g/l, avec une vitesse ne dépassant pas en général 4 BV/h de façon à bien saturer la résine tout en évitant des fuites prématurées de Ru dans l'effluent. On opère de préférence à température ambiante, en-dessous de 50°C en particulier pour préserver la résine.

### EXEMPLE 1

Pour illustrer le procédé selon l'invention, on a utilisé une solution de départ de nitrate d'uranyle de coposition suivante:

| | |
|---|---|
| Teneur en U: | 380 g/l |
| Teneur en H⁺: | 0,106 N |
| Teneur en Ru | 1 mg/l (soit 7,4 ppb/U ou 925 000 Bq/kgU ou 25 »Ci/kgU) |

On utilise une colonne de résine BV=25 cm^{3.}

La résine utilisée est IRA 93 SP.
On introduit simultanément dans la colonne la solution uranifère et une solution à 25 g/l de nitrite d'ammonium de façon à ce que la teneur en nitrite (exprimée en NO₂) de la solution uranifère passant sur la résine soit de 5g/l.

Le débit de la solution uranifère est de 2 BV/h.
Dans ces conditions, la fuite en Ru est nulle jusqu'après avoir passé 20 BV de la solution uranifère; la résine est saturée et elle ne fixe plus Ru à partir de 25 BV.

On a ensuite procédé au lavage de la résine saturée avec de l'eau à 40°C avant d'éluer le ruthénium à l'aide de 5 BV d'une solution d'acide nitrique 2 N.

Une série de cycles fixation-lavage-élution a été effectuée et les solutions effluentes obtenues, contenant Ru, regroupées.

On a alors neutralisé la solution résultant à l'aide d'une solution concentrée de NH₄OH jusqu'à pH9. La solution de NH₄NO₃ (190 g/l) obtenue contenant Ru en solution (5 mg/l ou 9430 Bq/l) a été passée dans une colonne de hauteur 60 cm et diamètre 1,3 cm contenant 65 cm³ (BV=65cm3) de la résine IMAC GT 73, à un débit de 4,5 BV.

Dans ces conditions une fuite de Ru apparaît après passage de 600 BV de la solution saline.

### EXEMPLE 2

Une solution saline analogue à la précédente, mais contenant seulement l'équivalent de 2100 Bq/l de Ru et obtenue en neutralisant l'effluent acide avec NH₃ jusqu'à pH9, a été passée sur la même résine à la vitesse de 3,0 BV/h. La fuite de Ru apparaît après passage de 1400 BV .

## Revendications

1. Procédé d'élimination du ruthénium d'une solution contenant du nitrate d'uranyle, caractérisé en ce qu'on ajoute des nitrites à ladite solution, en ce qu'on fixe le ruthénium par passage sur une résine ammonium quaternaire ou amine tertiaire et en ce qu'on obtient une solution d'uranium complétement exempte du ruthénium.

2. Procédé selon la revendication 1, caractérisé en ce que la concentration en nitrites de ladite solution est comprise entre 0,1 et 50 g/l (exprimé en NO₂).

3. Procédé selon l'une quelconque des revendications 1 et 2, caractérisé en ce qu'on élue le ruthénium fixé sur ladite résine à l'aide d'une solution d'élution contenant un acide fort.

4. Procédé selon la revendication 3, caractérisé en ce que l'acide fort est de l'acide nitrique.

5. Procédé selon la revendication 3, caractérisé en ce que la solution d'élution est neutralisée, le ruthénium restant en solution dans la solution de sel obtenue et en ce que le ruthénium est ensuite fixé par passage de ladite solution de sel sur une résine du type thiol comportant un groupement RSH.

6. Procédé selon la revendication 5, caractérisé en ce que la résine thiol est la résine IMAC GT 73 de Duolite (marque déposée).

7. Procédé selon la revendication 5, caractérisé en ce que la neutralisation de la solution d'élution est faite par l'ammoniac ou une solution concentrée de base forte alcaline jusqu'à un pH supérieur à 5.

8. Procédé selon la revendication 7, caractérisé en ce que la solution neutralisée est une solution de nitrate d'ammonium, de potassium ou de sodium contenant le ruthénium en solution.

## Claims

1. Process for the elimination of ruthenium from a solution containing uranyl nitrate, characterized in that nitrites are added to said solution, that the ruthenium is fixed by passage on a tertiary amine or quaternary ammonium resin and that a completely ruthenium-free uranium solution is obtained.

2. Process according to claim 1, characterized in that the nitrite concentration of said solution is between 0.1 and 50 g/l (expressed as NO₂).

3. Process according to either of the claims 1 and 2, characterized in that the ruthenium fixed to said resin is eluted with the aid of an eluting solution containing a strong acid.

4. Process according to claim 3, characterized in that the strong acid is nitric acid.

5. Process according to claim 3, characterized in that the eluting solution is neutralized, the ruthenium remaining in solution in the salt solution obtained and that the ruthenium is then fixed by the passage of said salt solution on a thiol-type resin having a RSH group.

6. Process according to claim 5, characterized in that the thiol resin is IMAC GT 73 resin of DUOLIT (registered trademark).

7. Process according to claim 5, characterized in that the neutralization of the eluting solution takes place by ammonia or a concentrated solution of a strong alkaline base to a pH exceeding 5.

8. Process according to claim 7, characterized in that the neutralized solution is an ammonium, potassium or sodium nitrate solution containing the ruthenium in dissolved form.

## Patentansprüche

1. Verfahren zum Entfernen von Ruthenium aus einer uranylnitrathaltigen Lösung,
**dadurch gekennzeichnet,**
daß man der genannten Lösung Nitride hinzufügt, daß man das Ruthenium fixiert, indem es über ein quartäres Ammoniumharz oder tertiäres Aminharz geleitet wird, und daß man eine Uraniumlösung erhält, die vollständig frei von Ruthenium ist.

2. Verfahren gemäß Anspruch 1,
**dadurch gekennzeichnet,**
daß die Nitritkonzentration der genannten Lösung zwischen 0,1 und 50 g/l umfaßt (ausgedrückt in NO₂).

3. Verfahren gemäß einem der Ansprüche 1 und 2,
**dadurch gekennzeichnet,**
daß man das auf dem genannten Harz fixierte Ruthenium mit Hilfe einer eine starke Säure enthaltenden Elutionslösung herauslöst.

4. Verfahren gemäß Anspruch 3,
**dadurch gekennzeichnet,**
daß die starke Säure eine Salpetersäure ist.

5. Verfahren gemäß Anspruch 3,
**dadurch gekennzeichnet,**
daß die Elutionslösung neutralisiert wird, wobei das Ruthenium in der erhaltenen Salzlösung in Lösung bleibt, und daß das Ruthenium anschließend fixiert wird, indem die genannte Salzlösung über ein Harz des Thioltyps geleitet wird, das eine RSH-Gruppe umfaßt.

6. Verfahren gemäß Anspruch 5,
**dadurch gekennzeichnet,**
daß das Thiolharz das Harz IMAC GT 73 von Duolite (hinterlegte Marke) ist.

7. Verfahren gemäß Anspruch 5,
**dadurch gekennzeichnet,**
daß die Neutralisation der Elutionslösung durch das Ammoniak oder eine mit stark alkalischer Base konzentrierte Lösung bis zu einem PH-Wert über 5 erzeugt wird.

8. Verfahren gemäß Anspruch 7,
**dadurch gekennzeichnet,**
daß die neutralisierte Lösung eine Lösung aus Ammonium-, Kaliumoder Natriumnitrat ist, die das Ruthenium in Lösung enthält.
